# EUROPÄISCHE PATENTSCHRIFT

(11) **EP 2 026 938 B1**
(45) Veröffentlichungstag und Bekanntmachung des Hinweises auf die Patenterteilung: **06.11.2013**
(21) Anmeldenummer: 07729323.1
(22) Anmeldetag: 21.05.2007
(51) Int. Cl.: B26F 3/16, B23K 26/00, C03B 33/08, B26F 3/00

(54) **DETEKTIERUNG DER ENERGIEEINTRAGUNG IN EINEN FESTKÖRPER BZW. EIN WERKSTÜCK**
DETECTING THE ENERGY INPUT INTO A SOLID OR A WORKPIECE
DÉTECTION DE L'ENTRÉE D'ÉNERGIE DANS UN CORPS SOLIDE OU UNE PIÈCE À USINER

(30) Priorität: 23.05.2006 DE 102006024510
(43) Veröffentlichungstag der Anmeldung: 25.02.2009
(73) Patentinhaber: CeramTec GmbH, 73207 Plochingen (DE)
(72) Erfinder: KLUGE, Claus, Peter, 95195 Röslau (DE)
(74) Vertreter: Uppena, Franz
(86) Internationale Anmeldenummer: PCT/EP2007/054879
(87) Internationale Veröffentlichungsnummer: WO 2007/135124

(56) Entgegenhaltungen:
- EP-A- 1 728 770
- EP-A2- 1 270 519
- DE-A1- 10 250 408
- JP-A- 63 153 457
- JP-A- 2003 073 148
- US-A- 3 636 759
- US-A- 3 652 225
- US-A1- 2004 091 588

## Beschreibung

Die Erfindung betrifft ein Verfahren zur Einbringung von Schwächungen in einen Festkörper bzw. ein Werkstück, bevorzugt eine Keramik oder ein Glas, durch eine Energiequelle, die durch eine gezielte lokal wirkende Energieeinbringung den Festkörper bzw. das Werkstück am Ort der Energieeinbringung schwächt und einen so behandelten Festkörper bzw. Werkstück.

Ein derartiges Verfahren gemäß des Oberbegrifts des Anspruchs 1 ist aus der EP 1 270 519 A2 bekannt.

Um Markierungen auf oder unter der Oberfläche von festen Materialien anzubringen, gibt es verschiedene Verfahren wie Anritzen mit harten spitzen Gegenständen oder das THERMARK-Verfahren (DE 195 41 453 A1), bei dem mit einem Laser Farbpartikel, beispielsweise aus einem Klebeband auf die Oberfläche eines Werkstücks transferiert und fixiert werden.

Das Verfahren erfordert eine sorgfältige Abstimmung des Bandmaterials, des Farbkörpers, des Bandabstandes von der ebenen Werkstückoberfläche.

Alternativ können die färbenden Substanzen (Gläser, Partikel) auch aufgedruckt oder aufgesprüht werden, bevor sie auf der Oberfläche des Werkstücks verfestigt werden.

Das Verfahren bedingt eine zumindest temporäre Verfestigung der Farbkörper auf der Oberfläche des Werkstücks, so dass eine gewisse örtliche Unschärfe nicht zuletzt durch Verspritzen des Materials unvermeidbar wird. Überflüssiges Material muss wieder entfernt werden.

Ein benötigter Tiefeneffekt (Eindringen von Chromophoren in Risse) wird von diesen Verfahren nicht bereitgestellt.

Ebenfalls Stand der Technik ist es, mit einem Laser unter Materialabtrag eine Ritz- oder Kerbstruktur in ein Werkstück einzubringen, die im Allgemeinen mit dem Auge bzw. für Bilderkennungssysteme gut erkennbar ist und so die Vereinzelung erleichtert.

Die Erfindung beschreibt unter anderem eine Markierungsmethode für ein beliebig geformtes Werkstück aus Keramik, Glas, Metall oder Kombinationen hieraus. Die Struktur wird gezielt sequentiell mit einer fokussierten Energiequelle oder durch eine temporäre Maske mit Hilfe einer geeigneten streuenden Energiequelle in x,y und wahlweise auch in z-Richtung eingebracht.

Die Markierung selbst kann irreversibel, reversibel oder nur temporär (flüchtig) sein.

Dabei kann die Markierung entweder direkt an den gewünschten Stellen eingebracht werden, oder nach vollständiger Bearbeitung des Werkstücks subtraktiv herausgearbeitet werden, indem an nicht vorgesehenen Stellen die Negativstrukturen wieder gezielt entfernt werden.

Die Markierung wird hervorgerufen durch eine chemische Reaktion eines Stoffes mit dem Werkstück, durch eine Materialeinlagerung eines Stoffes in das Werkstück, durch eine Gefügeänderung oder lokale Änderung bestimmter chemischer, physikalischer oder biologischer Eigenschaften des Werkstücks.

Die Energiequelle kann ein Brenner, ein UV-, VIS- oder IR-Strahler, aber auch eine mechanische Energiequelle wie eine lokale Streckung sein.

Die Detektion der eingebrachten Struktur kann beispielsweise mit dem Auge bei Farbänderungen im sichtbaren Bersich oder auch mit Hilfe physikalisch-chemischer Detektoren erfolgen.

Die Erfindung betrifft daher in einer Ausgestaltung ein Verfahren zur Einbringung von Schwächungen in einen Festkörper bzw. ein Werkstück, bevorzugt eine Keramik o-der ein Glas, durch eine Energiequelle, die durch eine gezielte lokal wirkende Energieeinbringung den Festkörper am Ort der Energieeinbringung schwächt.

Erfindungsgemäß wird vor und/oder gleichzeitig zur Energieeinbringung der Ort der Energieeinbringung mit chromophoren Stoffen beaufschlagt, so dass eine physikalische, chemische oder biologische sichtbare Veränderung des Festkörpers bzw. des Werkstückes am Ort der Energieeinbringung erreicht wird.

In einer anderen Ausgestaltung betrifft die Erfindung einen Festkörper bzw. Werkstück, bevorzugt eine Keramik oder ein Glas, mit einer lokal eingebrachten Schwächung, die sich von der Oberfläche des Werkstücks (1) in dessen Inneres erstreckt.

Erfindungsgemäß ist die Schwächung durch eingebrachte bzw. eingedrungene chromophore Stoffe detektierbar und/oder farblich gekennzeichnet.

### Beispiele :

A) Verwendet man ein nicht ablativ arbeitendes Laserverfahren, das beispielsweise nur eine zweidimensionale Bruchlinie ohne Materialabtrag erzeugt, oder wird die E-nergie des Laserstrahls soweit verringert, dass keine Trennstelle im Gefüge erzeugt wird oder keine Oberflächenverletzung am Werkstück mehr statt findet, kann man diese mit dem Laser oder einer anderen punkt-, linien- oder flächenhaft arbeitenden Energiequelle nur mit genau angepasster Beleuchtung bzw. gar nicht mehr erkennen.

Erwünscht ist auch für ein solches Markier- oder Trennverfahren eine leichte Wiedererkennbarkeit der überfahrenen Positionen, welche schnell, genau und ohne apparativen Aufwand ausgeführt werden kann, ohne dass aufgebrachte Fremdmaterialien die Geometrie des Werkstücks durch ihr eigenes Volumen verändern.

Wird die Oberfläche des Werkstücks unmittelbar nach dem Einbringen der Energie durch eine Kühlflüssigkeit, im einfachsten Fall ein wässriges Medium, schockartig abgekühlt wird, wobei aber die eingebrachte Energie noch dazu genutzt wird, eine Reaktion zwischen der Kühlflüssigkeit bzw. von darin gelösten (z.B. chromophore) Substanzen mit der Oberfläche des Werkstücks (Keramik, Metall-Keramik, Glas) hervorzurufen, durch welche die Spur der Energiequelle nach der Behandlung noch verfolgbar wird.

Die chromophoren Substanzen dringen in eine mechanisch unversehrte Oberfläche ebenso ein wie sie bei einem Risse erzeugenden Energieeintrag diesen Rissen folgen und die innere Oberfläche dieser Risse benetzen und bei geeignetem Energieeintrag auch mit der Oberfläche reagieren. Dabei werden diese chromophoren Substanzen vom Werkstück absorbiert bzw. sie reagieren hiermit (in Abgrenzung zum THERMARK-Verfahren) ohne messbare Volumenänderung. Überschüssige Chromophore brauchen nicht mechanisch oder chemisch entfernt zu werden.

Für ein Werkstück aus weißem Aluminiumoxid eignen sich beispielsweise besonders gut solche Substanzen, die unter Wärmeeinfluß stark gefärbte Spinelle bilden, wie Kobalt-salze oder Chrom-salze oder Eisen-salze oder Zink-salze oder Kombinationen von mindestens zwei Salzen. Bei geeigneter Dosierung (etwa 0,01 - 50 g / Liter Kühlflüssigkeit) erhält man wasserfeste feine graue Linien entlang den eingebrachten Rissen, die mit dem unbewaffneten Auge sichtbar sind und beispielsweise eine Justierung für weitere Arbeitsschritte oder eine spätere Separierung erleichtern.
B) Mit einem Laser werden feine Gefügeverletzungen in ein Werkstück eingebracht. Das Kühlmittel bzw. dessen chromophore Bestandteile dringen ebenfalls in die Risse ein und verbleiben dort, selbst nach Verdunsten flüchtiger Bestandteile des Kühlmittels.

Die Erfindung betrifft demnach Festkörper, bevorzugt Keramiken oder Gläser, in die durch lokal einwirkende Energiequellen, z.B. Laserstrahl oder Brenner, eine in der Regel nicht sichtbare Bruchlinie eingebracht wird. Durch diese Bruchlinie wird eine leichtere Vereinzelung der Festkörper in kleinere Einheiten erreicht.

Erfindungsgemäß wird gleichzeitig zur Energieeinbringung der Ort der Energieeinbringung mit farbgebenden, d.h. chromophoren Stoffen beaufschlagt, so dass eine physikalische, chemische oder biologische sichtbare Veränderung der Bruchlinie erreicht wird.

Die Bruchlinie ist hierdurch dauerhaft und detektierbar markiert.

Wenn die Beaufschlagung des Ortes der Energieeinbringung mit farbgebenden Stoffen nicht gleichzeitig bzw. unmittelbar zur Energieeinbringung erfolgen würde, hätte sich die Bruchlinie wieder geschlossen und eine Markierung wäre nur noch auf der Oberfläche des Festkörpers möglich.

Als weiteres Beispiel sei ein flächiger keramischer Trägerkörper genannt, der mit einer biologischen Nährstofflösung bedeckt ist.

In den keramischen Trägerkörper werden nach der Herstellung, d.h. nach dem Sintern markierte Bruchlinien eingebracht und anschließend mit der Nährstofflösung beschichtet. Der Anwender kann sich dann einzelne Stücke abbrechen, wobei er durch die Markierung den Ort der Bruchlinien sieht.

Dadurch, dass vor und/oder gleichzeitig zur Energieeinbringung der Ort der Energieeinbringung mit chromophoren Stoffen beaufschlagt wird, so dass eine physikalische, chemische oder biologische sichtbare Veränderung des Festkörpers bzw. des Werkstückes am Ort der Energieeinbringung erreicht wird, ist der Ort der Energieeinbringung markiert und der Festkörper bzw. das Werkstück lässt sich leicht weiter bearbeiten oder weiter verwenden.

Der Festkörper bzw. das Werkstück kann teilflächig oder vollflächig mit chromophoren Stoffen beaufschlagt werden und erst danach erfindungsgemäß behandelt werden.

Dabei kann die Beaufschlagung mit chromophoren Stoffen in beliebigen Abfolgen und Häufigkeiten auf dem Festkörper bzw. das Werkstück vorgenommen werden.

Die chromophoren Stoffe können gelöst oder suspensiert oder dispergiert oder pulverförmig oder in Kombinationen hiervon verwendet werden.

Bevorzugt sind die chromophoren Stoffe Elemente oder deren Verbindungen von Vanadium oder Mangan oder Kupfer oder Silber oder Wolfram oder Nickel oder Kobalt oder Chrom oder Eisen oder Zink oder Kombinationen von mindestens zwei dieser Elemente oder Verbindungen von mindestens einem dieser Element oder Kombinationen von Verbindungen und/oder Elementen.

In einer Ausführungsform der Erfindung werden Trägerflüssigkeiten verwendet, in denen die chromophoren Stoffe vermischt sind, und die Trägerflüssigkeiten Lösungen oder Suspensionen oder Dispersionen, oder Kombinationen hiervon, der chromophore Stoffe sind, mit Konzentrationen von mindestens einem chromophoren Stoff in mindestens 0,01 Gramm / Liter Trägerflüssigkeit. Mit dieser Trägerflüssigkeit wird vor und/oder gleichzeitig zur Energieeinbringung der Ort der Energieeinbringung beaufschlagt.

In einer anderen Ausführungsform der Erfindung werden Trägersubstanzen verwendet, in denen pulverförmiger chromophorer Stoff vermischt ist und die Konzentration des chromophoren Stoffes mindestens einen Anteil von 0,001 Gew.-% an der Trägersubstanz beträgt, und die Trägersubstanz mindestens einen Haftvermittler oder/und mindestens ein Bindemittel und/oder weitere Zuschlagstoffe oder Kombinationen hiervon enthält.

Für jeden Festkörper bzw. Werkstück können Trägerflüssigkeiten und/oder Trägersubstanzen in beliebigen Reihenfolgen einfach oder mehrfach mit gleichen oder unterschiedlichen Zusammensetzungen verwendet werden.

Für Trägerflüssigkeiten und/oder Trägersubstanzen kann die Farbintensität durch unterschiedliche Konzentrationen der chromophoren Stoffe in der Trägerflüssigkeit und/oder Trägersubstanz eingestellt werden, wobei ein Anstieg der Konzentration der chromophoren Stoffe in der Trägerflüssigkeit und/oder Trägersubstanz proportional zur Intensität der entstehenden Verfärbung in dem Festkörper bzw. Werkstück (1) ist.

Für eine Trägerflüssigkeit und/oder Trägersubstanz kann die Farbintensität auch durch unterschiedlichen Energieeintrag der Energiequelle eingestellt werden, wobei bei gleicher Konzentration und Zusammensetzung der Trägerflüssigkeit und/oder Trägersubstanz ein Anstieg des Energieeintrages zu einer Veränderung der Intensität der Verfärbung führt.

Zur Einstellung der Verfärbung kann so die Konzentration der chromophoren Stoffe in der Trägerflüssigkeit und/oder Trägersubstanz und/oder die Intensität der Energieeintragung verändert werden.

Die Veränderung der Intensität der Verfärbung wird in einer erfinderischen Anwendung zur Beurteilung der Schwächung und/oder des Grades der Schwächung des Festkörpers bzw. Werkstücks verwendet.

Vor und/oder während des Energieeintrages kann auch mindestens ein weiterer fester oder flüssiger Stoff mit dem Ort der Energieeinbringung in Verbindung gebracht werden und der Stoff während oder nach dem Energieeintrag in die Schwächung eindringen.

Für diesen weiteren Stoff eignen sich bevorzugt Fluoreszin oder Resorcin oder Fuchsin oder Kombinationen hiervon.

In einer erfinderischen Ausgestaltung wird mindestens eine Trägerflüssigkeit und/oder eine Trägersubstanz über mindestens eine Zuführung dem Ort der Energieeintragung, mit dem Energieeintrag synchronisiert, zugeführt. Die Zuführung kann zum Beispiel ein Rohr bzw. eine Zuführvorrichtung sein.

Bevorzugt wird mindestens eine Trägerflüssigkeit und/oder eine Trägersubstanz in einem Vorratsbehälter gemischt oder aktiv gerührt dem Ort der Energieeintragung dosiert oder undosiert zugeführt.

Für je eine Trägerflüssigkeit und/oder eine Trägersubstanz kann jeweils ein separater Vorratsbehälter verwendet werden und die Abgänge der Vorratsbehälter parallel und/oder in Reihe miteinander verbunden und während des Verfahrens gleiche oder unterschiedliche Mengen aus den Vorratsbehältern dosiert oder undosiert entnommen werden.

Es kann auch mindestens eine Trägerflüssigkeit und/oder Trägersubstanz mit mindestens einem weiteren für das Verfahren notwendigen flüssigen oder gasförmigen, oder Kombinationen hiervon, Stoff vermischt und/oder parallel zugeführt werden.

Ein Festkörper bzw. Werkstück, bevorzugt aus einer Keramik oder ein Glas, welches nach dem erfindungsgemäßen Verfahren behandelt wurde, zeichnet sich dadurch aus, dass es eine lokal eingebrachten Schwächung aufweist, die sich von der Oberfläche des Festkörpers bzw. Werkstücks in dessen Inneres erstreckt, und die Schwächung durch eingedrungene chromophore Stoffe detektierbar und/oder farblich gekennzeichnet ist.

Bevorzugt sind die Stoffe durch Strahlung, bevorzugt UV-Licht, zur Fluoreszenz anregbar.

Das Material des Festkörpers bzw. Werkstücks besteht in einer Ausführung aus einem der folgenden Stoffgruppen oder Kombinationen hiervon:
a) "Aluminiumoxid" mit einem Hauptkomponentenanteil von > 50,1 Gewichts-% Aluminiumoxid
b) "Zirkonoxid" mit einem Hauptkomponentenanteil von > 50,1 Gewichts-% Zirkonoxid
c) "Aluminiumnitrid" mit einem Hauptkomponentenanteil von > 50,1 Gewichts-% Aluminiumnitrid
d) "Siliziumnitrid" mit einem Hauptkomponentenanteil von > 50,1 Gewichts-% Siliziumnitrid
und als Zusatzstoffe das Material bevorzugt CaO oder SiO₂ oder MgO oder B₂O₃ oder Y₂O₃ oder Sc₂O₃ oder CeO₂ oder Cu-Oxide oder Metalle oder Verunreinigungen <= 2 Gew% oder Kombinationen hiervon enthält.

Auf dem Festkörper bzw. Werkstück sind in einer Ausführungsform zusammengehörige oder getrennte gefärbte Bereiche mit gleicher oder/und unterschiedlicher Verfärbung und/oder Intensität der Verfärbung angeordnet.

Auf dem Festkörper bzw. Werkstück ist in einer Anwendungsform mindestens eine vollflächige oder teilflächige Trägerflüssigkeit und/oder Trägersubstanz, chromophore Stoffe enthaltend, angeordnet und dieser so behandelte Festkörper bzw. Werkstück wird als Vorprodukt für das erfindungsgemäße Verfahren oder den erfindungsgemäßen Festkörper oder Werkstück verwendet.

Dieses Vorprodukt, bzw. der so behandelte Festkörper bzw. Werkstück kann zur Bestimmung der Intensität und/oder des Intensitätsverlaufes von mindestens einer Energiequelle verwendet werden.

Auch kann der Festkörper bzw. das Werkstück (Vorprodukt) zur Justage mindestens eines Energieeintragungsprozesses und/oder zur Bewertung der Konstanz des Energieeintragungsprozesses und/oder zur Archivierung des Ergebnisses des Energieeintrages verwendet werden.

Nachfolgend wird die Erfindung anhand von Figuren näher erläutert.

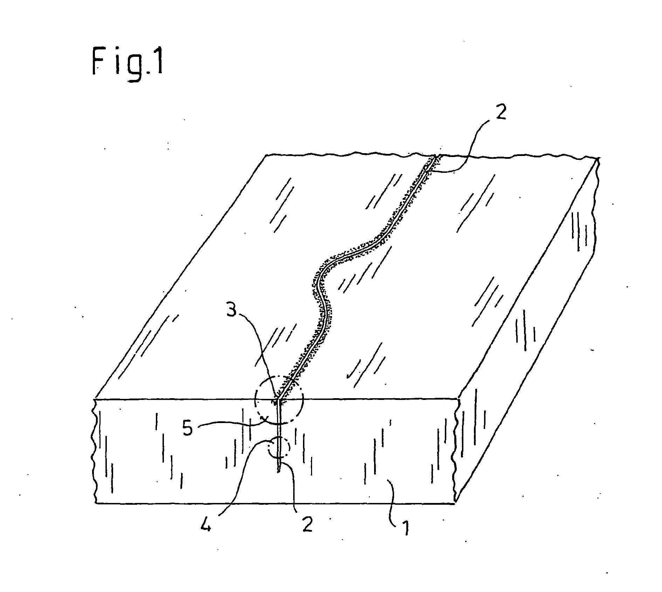

Figur 1 zeigt einen Festkörper bzw. Werkstück 1 mit einer eingebrachten lokalen mechanischen Schwächung 2, bzw. Sollbruchstelle oder allgemein Bruchlinie.

Mit dem Bezugszeichen 3 ist ein Farbstoff bzw. ein chromophorer Stoff bezeichnet, der durch eine festkörperchemische Reaktion während der lokalen Wärmebehandlung zur Erzeugung der Schwächung 2 von selbst entstanden ist.

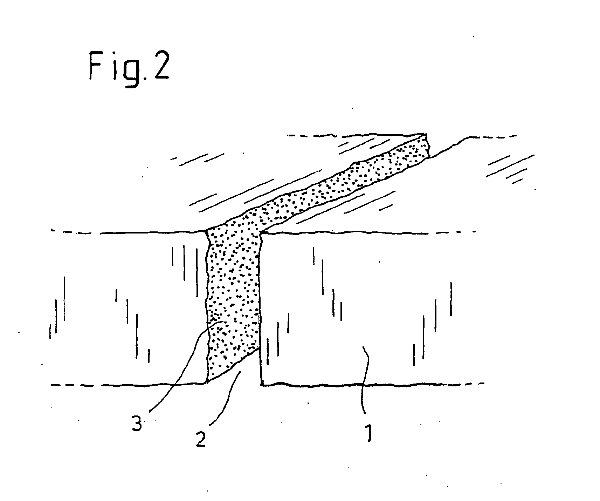

Das Bezugszeichen 4 kennzeichnet eine Ausschnittsvergrösserung, die in der Figur 2 vergrößert dargestellt ist.

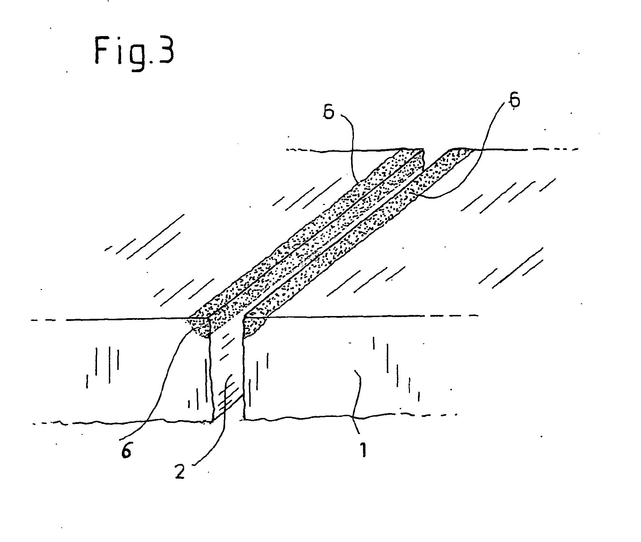

Das Bezugszeichen 5 kennzeichnet eine Ausschnittsvergrösserung, die in der Figur 3 vergrößert dargestellt ist.

Figur 2 zeigt den Ausschnitt 4 von Figur 1 vergrößert dargestellt, mit dem Festkörper bzw. das Werkstück 1 mit der eingebrachten Schwächung 2. In diese Schwächung ist in die durch die Energieeinbringung bzw. Wärmebehandlung kurzzeitig geschaffene Mikrokavität im Werkstück am Ort der Energieeinbringung ein partikulärer oder abgelagerter Farbstoff 3 eingedrungen.

Figur 3 zeigt den Ausschnitt 5 von Figur 1 vergrößert dargestellt. In den Festkörper bzw. das Werkstück 1 ist eine Schwächung 2 eingebracht. Mit dem Bezugszeichen 6 ist eine Reaktionszone bezeichnet, in der das Material des Werkstückes 1 mit einer Salzverbindung während der Wärmebehandlung zu einer lokalen farblichen Veränderung des Werkstückes 1 geführt hat.

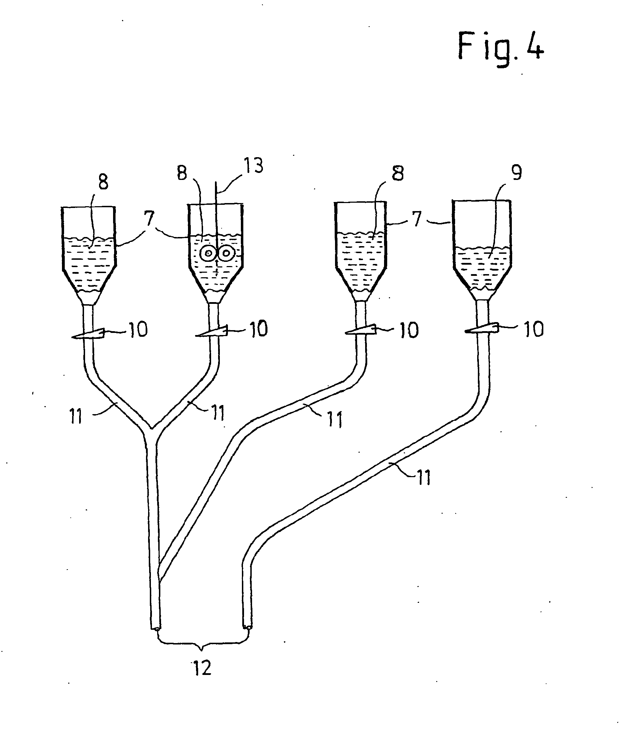

Figur 4 zeigt eine Zuführvorrichtung für die chromophoren Stoffe zu dem Ort der Energieeinbringung. Die chromophoren Stoffe sind dabei in einer Trägerflüssigkeit 8 oder in einer Trägersubstanz 9 enthalten und befinden sich in Vorratsbehältern 7. In einem Vorratsbehälter ist ein Rührwerk 13 zur besseren Durchmischung der chromophoren Stoffe in der Trägerflüssigkeit 8 angeordnet.

Über eine Dosierung 10, zum Beispiel Ventile, gelangt die Trägerflüssigkeit 8 und/oder die Trägersubstanz 9 in die Abgänge 11 und von dort aus über die Zuführungen 12 zum Ort der Energieeinbringung auf den Festkörper bzw. auf das Werkstück.

## Patentansprüche

1. Verfahren zur Einbringung von Schwächungen (2) in einen Festkörper bzw. ein Werkstück (1), bevorzugt eine Keramik oder ein Glas, durch eine Energiequelle, die durch eine gezielte lokal wirkende Energieeinbringung den Festkörper bzw. das Werkstück (1) am Ort der Energieeinbringung schwächt,
**dadurch gekennzeichnet, dass** vor und/oder gleichzeitig zur Energieeinbringung der Ort der Energieeinbringung mit chromophoren Stoffen beaufschlagt wird, so dass eine physikalische, chemische oder biologische sichtbare Veränderung des Festkörpers bzw. des Werkstückes (1) am Ort der Energieeinbringung erreicht wird.

2. Verfahren nach Anspruch 1, **dadurch gekennzeichnet, dass** der Festkörper bzw. das Werkstück (1) teilflächig oder vollflächig mit chromophoren Stoffen beaufschlagt wird.

3. Verfahren nach einem der vorherigen Ansprüche, **dadurch gekennzeichnet, dass** die chromophoren Stoffe gelöst oder suspensiert oder dispergiert oder pulverförmig oder in Kombinationen hiervon verwendet werden.

4. Verfahren nach einem der vorherigen Ansprüche, **dadurch gekennzeichnet, dass** die chromophoren Stoffe Elemente oder deren Verbindungen von Vanadium oder Mangan oder Kupfer oder Silber oder Wolfram oder Nickel oder Kobalt oder Chrom oder Eisen oder Zink oder Kombinationen von mindestens zwei dieser Elemente oder Verbindungen von mindestens einem dieser Element oder Kombinationen von Verbindungen und / oder Elementen sind.

5. Verfahren nach einem der vorherigen Ansprüche, **dadurch gekennzeichnet, dass** Trägerflüssigkeiten (8) verwendet werden, in denen die chromophoren Stoffe vermischt sind, und die Trägerflüssigkeiten (8) Lösungen oder Suspensionen oder Dispersionen, oder Kombinationen hiervon, der chromophore Stoffe sind, mit Konzentrationen von mindestens einem chromophoren Stoff in mindestens 0,01 Gramm / Liter Trägerflüssigkeit.

6. Verfahren nach einem der vorherigen Ansprüche, **dadurch gekennzeichnet, dass** Trägersubstanzen (9) verwendet werden, in denen pulverförmiger chromophorer Stoff vermischt ist und die Konzentration des chromophoren Stoffes mindestens einen Anteil von 0,001 Gew.-% an der Trägersubstanz (9) beträgt, und die Trägersubstanz (9) mindestens einen Haftvermittler oder/und mindestens ein Bindemittel und/oder weitere Zuschlagstoffe oder Kombinationen hiervon enthält,

7. Verfahren nach einem der vorherigen Ansprüche, **dadurch gekennzeichnet, dass** für jeden Festkörper bzw. Werkstück (1) Trägerflüssigkeiten (8) und/oder Trägersubstanzen (9) in beliebigen Reihenfolgen einfach oder mehrfach mit gleichen oder unterschiedlichen Zusammensetzungen verwendet werden.

8. Verfahren nach einem der vorherigen Ansprüche, **dadurch gekennzeichnet, dass** für Trägerflüssigkeiten (8) und/oder Trägersubstanzen (9) die Farbintensität durch unterschiedliche Konzentrationen der chromophoren Stoffe in der Trägerflüssigkeit (8) und/oder Trägersubstanz (9) eingestellt wird, wobei ein Anstieg der Konzentration der chromophoren Stoffe in der Trägerflüssigkeit (8) und/oder Trägersubstanz (9) proportional zur Intensität der entstehenden Verfärbung in dem Festkörper bzw. Werkstück (1) ist.

9. Verfahren nach einem der vorherigen Ansprüche, **dadurch gekennzeichnet, dass** für eine Trägerflüssigkeit (8) und/oder Trägersubstanz (9) die Farbintensität durch unterschiedlichen Energieeintrag der Energiequelle eingestellt wird, wobei bei gleicher Konzentration und Zusammensetzung der Trägerflüssigkeit (8) und/oder Trägersubstanz (9) ein Anstieg des Energieeintrages zu einer Veränderung der Intensität der Verfärbung führt.

10. Verfahren nach einem der vorhergehenden Ansprüche, **dadurch gekennzeichnet, dass** zur Einstellung der Verfärbung die Konzentration der chromophoren Stoffe in der Trägerflüssigkeit (8) und/oder Trägersubstanz (9) und/oder die Intensität der Energieeintragung verändert werden.

11. Verfahren nach einem der vorhergehenden Ansprüche, **dadurch gekennzeichnet, dass** die Veränderung der Intensität der Verfärbung zur Beurteilung der Schwächung (2) und/oder den Grad der Schwächung (2) des Festkörpers bzw. Werkstücks (1) verwendet wird.

12. Verfahren nach einem der vorhergehenden Ansprüche, **dadurch gekennzeichnet, dass** vor und/oder während des Energieeintrages mindestens ein weiterer fester oder flüssiger Stoff mit dem Ort der Energieeinbringung in Verbindung gebracht wird und der Stoff während oder nach dem Energieeintrag in die Schwächung (2) eindringt.

13. Verfahren nach Anspruch 12, **dadurch gekennzeichnet, dass** für diesen weiteren Stoff Fluoreszin oder Resorcin oder Fuchsin oder Kombinationen hiervon, verwendet wird.

14. Verfahren nach einem der vorhergehenden Ansprüche, **dadurch gekennzeichnet, dass** mindestens eine Trägerflüssigkeit (8) und/oder eine Trägersubstanz (9) über mindestens eine Zuführung (12) dem Ort der Energieeintragung, mit dem Energieeintrag synchronisiert, zugeführt wird.

15. Verfahren nach einem der vorhergehenden Ansprüche, **dadurch gekennzeichnet, dass** mindestens eine Trägerflüssigkeit (8) und/oder eine Trägersubstanz (9) in einem Vorratsbehälter (7) gemischt oder aktiv gerührt wird und dem Ort der Energieeintragung dosiert oder undosiert zugeführt wird.

16. Verfahren nach einem der vorhergehenden Ansprüche, **dadurch gekennzeichnet, dass** für je eine Trägerflüssigkeit (8) oder eine Trägersubstanz (9) jeweils ein separater Vorratsbehälter (7) verwendet wird und die Abgänge (11) der Vorratsbehälter (7) parallel und/oder in Reihe miteinander verbunden sind und während des Verfahrens gleiche oder unterschiedliche Mengen aus den Vorratsbehältern (7) dosiert oder undosiert entnommen werden.

17. Verfahren nach einem der vorhergehenden Ansprüche, **dadurch gekennzeichnet, dass** mindestens eine Trägerflüssigkeit (8) und/oder Trägersubstanz (9) mit mindestens einem weiteren für das Verfahren notwendigen flüssigen oder gasförmigen, oder Kombinationen hiervon, Stoff vermischt und/oder parallel zugeführt wird.

18. Verfahren nach einem der vorhergehenden Ansprüche, **dadurch gekennzeichnet, dass** die Stoffe durch Strahlung, bevorzugt UV-Licht, zur Fluoreszenz anregbar sind.

19. Verfahren nach einem der vorhergehenden Ansprüche, **dadurch gekennzeichnet, dass** das Material des Festkörpers oder des Werkstücks (1) aus einem der folgenden Stoffgruppen oder Kombinationen hiervon besteht:
a) "Aluminiumoxid" mit einem Hauptkomponentenanteil von > 50,1 Gewichts-% Aluminiumoxid
b) "Zirkonoxid" mit einem Hauptkomponentenanteil von > 50,1 Gewichts-% Zirkonoxid
c) "Aluminiumnitrid" mit einem Hauptkomponentenanteil von > 50,1 Gewichts-% Aluminiumnitrid
d) "Siliziumnitrid" mit einem Hauptkomponentenanteil von > 50,1 Gewichts-% Siliziumnitrid
und als Zusatzstoffe das Material bevorzugt CaO oder SiO₂ oder MgO oder B₂O₃ oder Y₂O₃ oder Sc₂O₃ oder CeO₂ oder Cu-Oxide oder Metalle oder Verunreinigungen <= 2 Gew% oder Kombinationen hiervon enthält.

20. Verfahren nach einem der Ansprüche 1 bis 19 zur Bestimmung der Intensität und/oder des Intensitätsverlaufes von mindestens einer Energiequelle.

21. Verfahren nach einem der Ansprüche 1 bis 19 zur Justage mindestens eines Energieeintragungsprozesses und/oder zur Bewertung der Konstanz des Energieeintragungsprozesses und/oder zur Archivierung des Ergebnisses des Energieeintrages.

## Claims

1. A method for introducing weakenings (2) into a solid or a workpiece (1), preferably a ceramic or a glass, by means of an energy source which, by means of targeted introduction of energy acting locally, weakens the solid or the workpiece (1) at the site of the introduction of energy,
**characterised in that**, before and/or at the same time as the introduction of energy, chromophoric materials are applied to the site of the introduction of energy so that a physical, chemical or biological visible change in the solid or the workpiece (1) is achieved at the site of the introduction of energy.

2. A method according to claim 1, **characterised in that** the solid or the workpiece (1) has chromophoric materials applied to part of or all over its surface.

3. A method according to one of the previous claims, **characterised in that** the chromophoric materials are dissolved or suspended or dispersed or are pulverized or are used in combinations of these states.

4. A method according to one of the previous claims, **characterised in that** the chromophoric materials are elements or their compounds of vanadium or manganese or copper or silver or tungsten or nickel or cobalt or chromium or iron or zinc or combinations of at least two of these elements or compounds of at least one of these elements or combinations of compounds and/or elements.

5. A method according to one of the previous claims, **characterised in that** carrier liquids (8) are used in which the chromophoric materials are mixed, and the carrier liquids (8) are solutions or suspensions or dispersions, or combinations thereof, of the chromophoric materials, with concentrations of at least one chromophoric material in at least 0.01 gram/litre carrier liquid.

6. A method according to one of the previous claims, **characterised in that** carrier substances (9) are used in which pulverized chromophoric material is mixed, and the concentration of the chromophoric material amounts to at least a proportion of 0.001 % by weight of the carrier substance (9), and the carrier substance (9) contains at least one adhesion promoter and/or at least one binding agent and/or further additional materials or combinations thereof.

7. A method according to one of the previous claims, **characterised in that** carrier liquids (8) and/or carrier substances (9) are used in any order, singly or in multiples, with the same or different compositions for each solid or workpiece (1).

8. A method according to one of the previous claims, **characterised in that** the colour intensity is adjusted for carrier liquids (8) and/or carrier substances (9) by means of different concentrations of the chromophoric materials in the carrier liquid (8) and/or carrier substance (9), with a rise in the concentration of the chromophoric materials in the carrier liquid (8) and/or carrier substance (9) being proportional to the intensity of the resultant discolouration in the solid or workpiece (1).

9. A method according to one of the previous claims, **characterised in that** the colour intensity is adjusted for a carrier liquid (8) and/or carrier substance (9) by differing energy input of the energy source, in which case given the same concentration and composition of the carrier liquid (8) and/or carrier substance (9) a rise in the energy input leads to a change in the intensity of the discolouration.

10. A method according to one of the preceding claims, **characterised in that** the concentration of the chromophoric materials in the carrier liquid (8) and/or carrier substance (9) and/or the intensity of the energy input are changed in order to adjust the discolouration.

11. A method according to one of the preceding claims, **characterised in that** the change in the intensity of the discolouration is used to judge the weakening (2) and/or the degree of weakening (2) of the solid or workpiece (1).

12. A method according to one of the preceding claims, **characterised in that** before and/or during the energy input at least one further solid or liquid material is associated with the site of the introduction of energy, and the material penetrates into the weakening (2) during or after the energy input.

13. A method according to claim 12, **characterised in that** fluorescin or resorcin or fuchsin or combinations thereof is/are used for this further material.

14. A method according to one of the preceding claims, **characterised in that** at least one carrier liquid (8) and/or one carrier substance (9) is fed by way of at least one feed (12) to the site of energy input, in a manner synchronized with the energy input.

15. A method according to one of the preceding claims, **characterised in that** at least one carrier liquid (8) and/or one carrier substance (9) is mixed in a supply container (7) or is actively stirred and is fed to the site of energy input in a metered or non-metered manner.

16. A method according to one of the preceding claims, **characterised in that** a separate supply container (7) is used in each case for each carrier liquid (8) or carrier substance (9), and the outflows (11) of the supply containers (7) are connected together in parallel and/or in series and during the method the same or different quantities are removed from the supply containers (7) in a metered or non-metered manner.

17. A method according to one of the preceding claims, **characterised in that** at least one carrier liquid (8) and/or carrier substance (9) is mixed and/or fed in parallel with at least one further material that is required for the method and is liquid or gaseous or is in combinations of these states.

18. A method according to one of the preceding claims, **characterised in that** the materials can be stimulated so that they are fluorescent by means of radiation, preferably UV light.

19. A method according to one of the preceding claims, **characterised in that** the material of the solid or the workpiece (1) consists of one of the following material-groups or combinations thereof:
a) "aluminium oxide" with a main component part of > 50.1 % by weight aluminium oxide
b) "zirconium oxide" with a main component part of > 50.1 % by weight zirconium oxide
c) "aluminium nitride" with a main component part of > 50.1 % by weight aluminium nitride
d) "silicon nitride" with a main component part of > 50.1 % by weight silicon nitride,
and as additives the material preferably contains CaO or SiO₂ or MgO or B₂O₃ or Y₂O₃ or Sc₂O₃ or CeO₂ or Cu oxides or metals or impurities <=2% by weight or combinations thereof.

20. A method according to one of claims 1 to 19 for determining the intensity and/or the variation in intensity of at least one energy source.

21. A method according to one of claims 1 to 19 for adjusting at least one energy-input process and/or for evaluating the constancy of the energy-input process and/or for archiving the result of the energy input.

## Revendications

1. Procédé pour introduire des affaiblissements (2) dans un corps solide ou une pièce (1), de préférence une céramique ou un verre, par l'intermédiaire d'une source d'énergie qui, par un apport ciblé d'énergie agissant localement, affaiblit le corps solide ou la pièce (1) à l'endroit de l'apport d'énergie, **caractérisé en ce que**, avant et/ou en même temps que l'apport d'énergie, l'endroit de l'apport d'énergie est soumis à des substances chromophores afin d'obtenir une modification physique, chimique ou biologique visible du corps solide ou de la pièce (1) à l'endroit de l'apport d'énergie.

2. Procédé selon la revendication 1, **caractérisé en ce que** le corps solide ou la pièce (1) est soumis à des substances chromophores sur une partie de sa surface ou sur toute sa surface.

3. Procédé selon une des revendications précédentes, **caractérisé en ce que** les substances chromophores sont utilisées en solution, en suspension, en dispersion, en poudre ou en combinaisons de celles-ci.

4. Procédé selon une des revendications précédentes, **caractérisé en ce que** les substances chromophores sont des éléments ou leurs composés de vanadium ou de manganèse ou de cuivre ou d'argent ou de tungstène ou de nickel ou de cobalt ou de chrome ou de fer ou de zinc, ou des combinaisons d'au moins deux de ces éléments, ou des composés d'au moins un de ces éléments, ou des combinaisons de composés et/ou d'éléments.

5. Procédé selon une des revendications précédentes, **caractérisé en ce qu'**il utilise des liquides porteurs (8) dans lesquels les substances chromophores sont mélangées, et les liquides porteurs (8) sont des solutions, des suspensions, des dispersions ou des combinaisons de celles-ci, des substances chromophores, avec des concentrations d'au moins une substance chromophore dans au moins 0,01 gramme/litre de liquide porteur.

6. Procédé selon une des revendications précédentes, **caractérisé en ce qu'**il utilise des substances porteuses (9) dans lesquelles une substance chromophore en poudre est mélangée, et la concentration de la substance chromophore représente au moins une proportion de 0,001 % en poids de la substance porteuse (9), et la substance porteuse (9) contient au moins un agent d'adhérence et/ou au moins un liant et/ou d'autres additifs ou des combinaisons de ceux-ci.

7. Procédé selon une des revendications précédentes, **caractérisé en ce que**, pour chaque corps solide ou pièce (1), des liquides porteurs (8) et/ou des substances porteuses (9) sont utilisés dans des ordres quelconques, une fois ou plusieurs fois avec les mêmes compositions ou des compositions différentes.

8. Procédé selon une des revendications précédentes, **caractérisé en ce que**, pour les liquides porteurs (8) et/ou les substances porteuses (9), l'intensité de coloration est réglée par différentes concentrations des substances chromophores dans le liquide porteur (8) et/ou la substance porteuse (9), une augmentation de la concentration des substances chromophores dans le liquide porteur (8) et/ou dans la substance porteuse (9) étant proportionnelle à l'intensité de la coloration obtenue dans le corps solide ou la pièce (1).

9. Procédé selon une des revendications précédentes, **caractérisé en ce que**, pour un liquide porteur (8) et/ou une substance porteuse (9), l'intensité de coloration est réglée par un apport d'énergie différent de la source d'énergie, une augmentation de l'apport d'énergie entraînant une modification de l'intensité de la coloration à concentration et composition égales du liquide porteur (8) et/ou de la substance porteuse (9).

10. Procédé selon une des revendications précédentes, **caractérisé en ce que**, pour régler la coloration, on modifie la concentration des substances chromophores dans le liquide porteur (8) et/ou dans la substance porteuse (9) et/ou l'intensité de l'apport d'énergie.

11. Procédé selon une des revendications précédentes, **caractérisé en ce que** la modification de l'intensité de la coloration sert à évaluer l'affaiblissement (2) et/ou le degré d'affaiblissement (2) du corps solide ou de la pièce (1).

12. Procédé selon une des revendications précédentes, **caractérisé en ce que**, avant et/ou pendant l'apport d'énergie, au moins une autre substance solide ou liquide est mise en contact avec l'endroit de l'apport d'énergie, et la substance pénètre dans l'affaiblissement (2) pendant ou après l'apport d'énergie.

13. Procédé selon la revendication 12, **caractérisé en ce que** de la fluorescéine, de la résorcine, de la fuchsine ou des combinaisons de celles-ci sont utilisées pour cette autre substance.

14. Procédé selon une des revendications précédentes, **caractérisé en ce qu'**au moins un liquide porteur (8) et/ou une substance porteuse (9) est amené à l'endroit de l'apport d'énergie, de manière synchronisée avec l'apport d'énergie, par au moins un moyen d'amenée (12).

15. Procédé selon une des revendications précédentes, **caractérisé en ce qu'**au moins un liquide porteur (8) et/ou une substance porteuse (9) est mélangé ou agité activement dans un réservoir de stockage (7) et amené de manière dosée ou non dosée à l'endroit de l'apport d'énergie.

16. Procédé selon une des revendications précédentes, **caractérisé en ce qu'**un réservoir de stockage (7) séparé est utilisé pour chaque liquide porteur (8) ou substance porteuse (9), et les sorties (11) des réservoirs de stockage (7) sont reliées entre elles en parallèle et/ou en série, et des quantités égales ou différentes sont prélevées de manière dosée ou non dosée dans les réservoirs de stockage (7) pendant le procédé.

17. Procédé selon une des revendications précédentes, **caractérisé en ce qu'**au moins un liquide porteur (8) et/ou une substance porteuse (9) est mélangé et/ou amené en parallèle avec au moins une autre substance liquide ou gazeuse, ou avec des combinaisons de celles-ci, nécessaire au procédé.

18. Procédé selon une des revendications précédentes, **caractérisé en ce que** les substances sont excitables en fluorescence par rayonnement, de préférence par lumière UV.

19. Procédé selon une des revendications précédentes, **caractérisé en ce que** le matériau du corps solide ou de la pièce (1) est composé d'un des groupes de substances suivants ou de combinaisons de ceux-ci :
a) « oxyde d'aluminium » avec une proportion de composant principal > 50,1 % en poids d'oxyde d'aluminium
b) « oxyde de zirconium » avec une proportion de composant principal > 50,1 % en poids d'oxyde de zirconium
c) « nitrure d'aluminium » avec une proportion de composant principal > 50,1 % en poids de nitrure d'aluminium
d) « nitrure de silicium » avec une proportion de composant principal > 50,1 % en poids de nitrure de silicium
et le matériau contient comme additifs, de préférence,
du CaO ou du SiO₂ ou du MgO ou du B₂O₃ ou du Y₂O₃ ou du Sc₂O₃ ou du CeO₂ ou des oxydes de Cu ou des métaux ou des impuretés <= 2 % en poids ou des combinaisons de ceux-ci.

20. Procédé selon une des revendications 1 à 19, pour déterminer l'intensité et/ou la variation d'intensité d'au moins une source d'énergie.

21. Procédé selon une des revendications 1 à 19, pour ajuster au moins un processus d'apport d'énergie et/ou pour évaluer la constance du processus d'apport d'énergie et/ou pour archiver le résultat de l'apport d'énergie.
